# EUROPEAN PATENT SPECIFICATION

(11) **EP 4 307 433 B1**
(45) Date of publication and mention of the grant of the patent: **06.05.2026**
(21) Application number: 22799002.5
(22) Date of filing: 31.03.2022
(51) Int. Cl.: H01M 10/42, H01M 50/105, G01B 11/06, H01M 10/04, H01M 10/48, H01M 50/166

(54) **METHOD AND SYSTEM FOR MANUFACTURING BATTERY CELL**
VERFAHREN UND SYSTEM ZUR HERSTELLUNG VON BATTERIEZELLEN
PROCÉDÉ DE FABRICATION ET SYSTÈME DE FABRICATION DE CELLULE DE BATTERIE

(30) Priority: 07.05.2021 KR 20210059566; 25.03.2022 KR 20220037670
(43) Date of publication of application: 17.01.2024
(73) Proprietor: LG Energy Solution, Ltd., Seoul 07335 (KR)
(72) Inventor: PARK, Wi Dae, Daejeon 34122 (KR); JUNG, Tae Kwang, Daejeon 34122 (KR); KIM, Seol Hee, Daejeon 34122 (KR); KIM, Min Su, Daejeon 34122 (KR); PARK, Dong Wook, Daejeon 34122 (KR); SEO, Dong Min, Daejeon 34122 (KR)
(74) Representative: Goddar, Heinz J.
(86) International application number: PCT/KR2022/004607
(87) International publication number: WO 2022/234956

(56) References cited:
- JP-A- 2013 239 263
- KR-A- 20180 049 512
- KR-A- 20210 026 296
- KR-A- 20210 046 958
- KR-B1- 102 146 945
- KR-B1- 102 236 698

## Description

### TECHNICAL FIELD

### TECHNICAL FIELD

The present invention relates to a method and system for manufacturing a battery cell, and more particularly, to a method and system for manufacturing a pouch-type battery cell.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

The secondary battery may be classified into a pouch-type battery cell and a can-type battery cell according to a material of the case accommodating the electrode assembly.

Particularly, in the pouch-type battery cell (hereinafter, referred to as a battery cell), an electrode assembly and an electrolyte are accommodated in a pouch.

In addition, it is common to inspect a thickness of a sealing part of the battery cell as one of the quality evaluations of the battery cell. The sealing part means a portion in which portions facing each other in the pouch are bonded to each other by welding.

However, in the related art, an operator manually inspected the thickness of the sealing part using a micrometer or the like. Thus, there is a problem that the total inspection is impossible, and accuracy and reliability in thickness measurement are deteriorated. KR 2018 0 049 512 A describes a battery cell manufacturing system capable of automatically inspecting the thickness of a sealing portion of a manufactured battery cell. KR 102 146 945 B1 describes an inspection facility for inspecting a secondary battery cell, particularly a pouch-shaped secondary battery cell. KR 2021 0 026 296 A describes a thickness measuring apparatus for measuring the thickness of thin sheets such as positive or negative electrode sheets of secondary batteries. A first thickness sensor and a second thickness sensor are fixedly installed oppositely to the sheet conveyed by a plurality of rollers therebetween. The first thickness sensor and the second thickness sensor may be any one of an ultrasonic sensor, a laser sensor, and a confocal sensor. A sensor support part including the first thickness sensor and a second thickness sensor is movable perpendicular to the transfer direction of the sheet. The sensor support part has a through opening formed so that the sheet passes.

### DISCLOSURE OF THE INVENTION

### TECHNICAL PROBLEM

An object achieved by the present invention is to provide a method and system for manufacturing a battery cell, which are capable of performing total inspection by automatically inspecting a thickness of a sealing part of the battery cell.

Another object achieved by the present invention is to provide a method and system for manufacturing a battery cell, in which accuracy and reliability of measuring a thickness of a sealing part of the battery cell are improved.

### TECHNICAL SOLUTION

A method for manufacturing a battery cell according to an embodiment of the present invention includes: a sealing process of forming a sealing part on a battery cell, in which an electrode assembly is accommodated in a pouch; a transfer process of transferring the battery cell to locate the sealing part between a first confocal-sensor and a second confocal-sensor, which are disposed to face each other; and a measurement process of measuring a thickness of the sealing part through the first confocal-sensor and the second confocal-sensor.

The method further includes a fixing process of fixing the sealing part in an unfolded state using a fixing member, which is performed between the transfer process and the measurement process. The fixing member comprises a first fixing member that supports one surface of the sealing part in the unfolded state, and a second fixing member that faces the first fixing member and supports the other surface of the sealing part in the unfolded state. An opening configured to reveal at least a portion of the sealing part with respect to the first confocal-sensor and the second confocal-sensor is formed in the fixing member. Each of the first confocal-sensor and the second confocal-sensor is provided in a pair to measure thicknesses of a pair of sealing parts disposed at sides opposite to each other with the electrode assembly therebetween.

In the measurement process, the first confocal-sensor and the second confocal-sensor may continuously or discontinuously measure the thickness of the sealing part while moving in a longitudinal direction of the sealing part.

In the measurement process, the first confocal-sensor and the second confocal-sensor may sequentially measure thicknesses at a plurality of points different from each other while moving in a longitudinal direction of the sealing part.

At least one of the plurality of points may be a position corresponding to an electrode lead.

A system for manufacturing a battery cell according to an embodiment of the present invention includes: a sealing unit configured to form a sealing part on a battery cell, in which an electrode assembly is accommodated in a pouch; a measurement unit including a first confocal-sensor and a second confocal-sensor, which are disposed to face each other; a transfer unit configured to transfer the battery cell so that the sealing part is disposed between the first confocal-sensor and the second confocal-sensor; and a controller configured to calculate a thickness of the sealing part based on a distance from the first confocal-sensor to one surface of the sealing part and a distance from the second confocal-sensor to the other surface of the sealing part. The fixing member comprises a first fixing member that supports one surface of the sealing part in the unfolded state, and a second fixing member that faces the first fixing member and supports the other surface of the sealing part in the unfolded state.

The system may further include a discharge unit configured to discharge the battery cell, in which the thickness of the sealing part is completely measured, to a subsequent process line. The subsequent process line may include a process of injecting an electrolyte into the battery cell.

The measurement unit further includes a fixing member configured to fix the sealing part in an unfolded state.

An opening configured to reveal at least a portion of the sealing part with respect to the first confocal-sensor and the second confocal-sensor is formed in the fixing member.

The measurement unit may further include a moving device configured to move the first confocal-sensor and the second confocal-sensor in parallel to a longitudinal direction of the sealing part. The first confocal-sensor and the second confocal-sensor may move by the moving device to continuously or discontinuously measure the thickness of the sealing part in the longitudinal direction of the sealing part.

The measurement unit may further include a moving device configured to move the first confocal-sensor and the second confocal-sensor in parallel to a longitudinal direction of the sealing part. The first confocal-sensor and the second confocal-sensor may move by the moving device to sequentially measure thicknesses at a plurality of points different from each other in the longitudinal direction of the sealing part.

The system may further include a storage configured to store thickness data calculated in the controller. The controller may be configured to: derive a critical range based on a plurality of pieces of thickness data stored in the storage for a sample group constituted by a plurality of secondary batteries; and determine that one secondary battery is defective when the thickness of the sealing part is out of the critical range in the one secondary battery.

Each of the first confocal-sensor and the second confocal-sensor is provided in a pair to measure thicknesses of a pair of sealing parts disposed at sides opposite to each other with the electrode assembly therebetween.

### ADVANTAGEOUS EFFECTS

According to the preferred embodiment of the present invention, the thickness of the sealing part may be automatically inspected by the confocal-sensor. Therefore, there may be the advantage in that it is possible to totally inspect and automatically dataize the sealing part of the battery cell. In addition, there may be the advantage in that the accuracy and reliability of measuring the thickness of the sealing part are improved.

In addition, since the thickness of the sealing part is measured in the state of being unfolded, the thickness of the sealing part in the longitudinal direction of the sealing part may be continuously or discontinuously measured to improve the accuracy and reliability of measuring the thickness of the sealing part.

In addition, since the thicknesses of the pair of sealing parts disposed opposite to each other with the electrode assembly therebetween are simultaneously measured, the time taken to perform the measurement process may be reduced.

### BRIEF DESCRIPTION OF THE DRAWINGS

FIG. 1 is an assembly view of a battery cell manufactured by a system for manufacturing a battery cell according to an embodiment of the present invention.
FIG. 2 is a schematic view illustrating the system for manufacturing the battery cell according to an embodiment of the present invention.
FIG. 3 is a control block diagram illustrating the system for manufacturing the battery cell according to an embodiment of the present invention.
FIG. 4 is a perspective view illustrating a measurement unit according to an embodiment of the present invention.
FIG. 5 is a plan view for explaining an operation of a fixing member according to an embodiment of the present invention.
FIG. 6 is a view for explaining operations of a first confocal-sensor and a second confocal-sensor according to an embodiment of the present invention.
FIG. 7 is a flowchart illustrating a method for manufacturing a battery cell according to an embodiment of the present invention.
FIG. 8 is a flowchart illustrating a method for manufacturing a battery cell according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

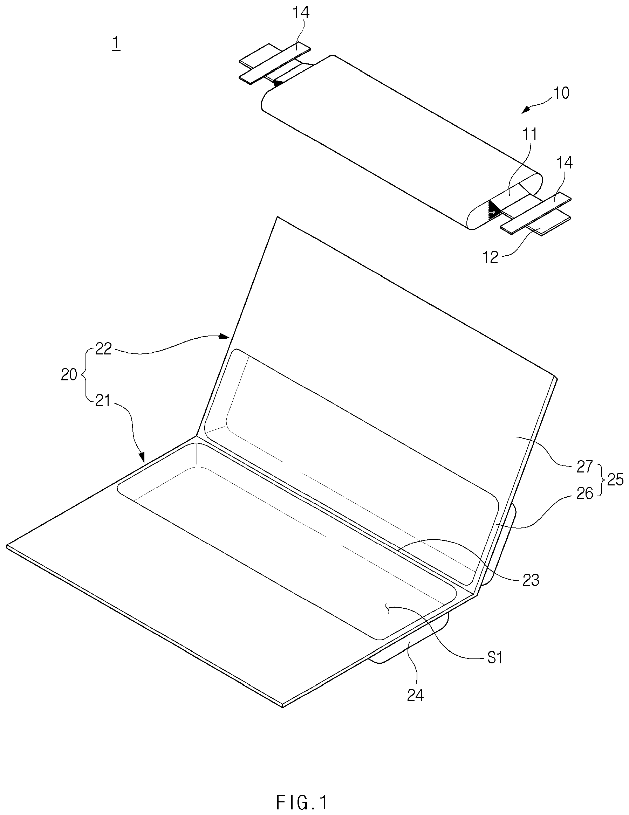

FIG. 1 is an assembly view of a battery cell manufactured by a system for manufacturing a battery cell according to an embodiment of the present invention.

A system for manufacturing a battery cell 1 (hereinafter, referred to as a 'manufacturing system') according to the present invention may manufacture a pouch-type battery cell 1.

In more detail, the battery cell 1 may include an electrode assembly 10, in which a positive electrode and a negative electrode are stacked with a separator therebetween, and a pouch 20 accommodating the electrode assembly 10.

The electrode assembly 10 may be provided with an electrode tab 11. The electrode tabs 11 are respectively connected to a positive electrode and a negative electrode of the electrode assembly 10 to protrude outward from the electrode assembly 10, thereby providing a path, through which electrons are moved, between the inside and outside of the electrode assembly 10.

The plurality of electrode tabs 11 connected to the positive electrode and the plurality of electrode tabs 11 connected to the negative electrode may protrude in different directions with respect to the electrode assembly 10. However, the present invention is not limited thereto, and the plurality of electrode tabs 11 connected to the positive electrode and the plurality of electrode tabs 11 connected to the negative electrode may protrude in parallel in the same direction with respect to the electrode assembly 10.

An electrode leads 12 supplying electricity to the outside of the battery cell 1 may be connected to the plurality of electrode tabs 11 by spot welding or the like. One end of the electrode lead 12 may be connected to the plurality of electrode tabs 11, and the other end of the electrode lead 12 may protrude to the outside of the pouch 20.

A portion of the electrode lead 12 may be surrounded by an insulating part 14. For example, the insulating part 14 may include an insulating tape. The insulating part 14 may be disposed between a pair of sides 26 of the pouch 20 to be described later, and in this state, the pair of sides 26 may be thermally fused to each other. In this case, a portion of the pair of sides 26 may be thermally fused to the insulating part 14. Thus, the insulating part 14 may prevent the electricity generated from the electrode assembly 10 from flowing to the pouch 20 through the electrode lead 12 and may maintain sealing of the pouch 20.

The pouch 20 may be formed by sealing a pair of cases 21 and 22 connected to each other by a folding part 23. A configuration of each case 21 and 22 to be described below will be described based on a state in which the pouch 20 is unfolded. The unfolded state of the pouch 20 means a state in which the pouch 20 is unfolded by releasing predetermined adhesion or sealing existing in the pouch 20.

Each of the cases 21 and 22 may include a cup part 24 having a recessed shape and a terrace 25 disposed around the cup part 24.

The cup part 24 may be recessed by a predetermined depth from the terrace 25 to form a recessed space S1.

The cup parts 24 of the pair of cases 21 and 22 may be connected to each other through the folding part 23. That is, the folding part 23 may be disposed between the pair of cup parts 24, and in a state in which the pouch 20 is unfolded, the folding part 23 may be referred to as a bridge. The folding part 23 may extend in parallel to a full-length direction of the pouch 20.

After the electrode assembly 10 is accommodated in a recessed space S1 of the cup part 24 formed in one case 21, the folding part 23 may be folded so that the cup part 24 formed in the other case 22 covers the electrode assembly 10.

That is, the recessed spaces S1 of the pair of cup parts 24 may communicate with each other, and the electrode assembly 10 may be accommodated in the pair of cup parts 24.

However, the configuration of the pouch 20 is not limited thereto, and a configuration in which the cup part 24 is formed only in one case 21, and the cup part 24 is not formed in the other case 22 is also possible. In this case, the electrode assembly 10 may be completely accommodated in the recessed space S1 of the cup part 24 formed in one case 21, and the other case 22 may cover the recessed space S1.

The terrace 25 may be disposed around an upper end of the cup part 24. In more detail, the terrace 25 may include an expansion part 27 disposed at an opposite side of the folding part 23 with respect to the cup part 24 and a pair of sides connecting the folding part 23 to the expansion part 27.

The pair of sides 26 extend in parallel to a full-width direction of the pouch 20 and may be disposed at sides opposite to each other with respect to the cup part 24. That is, the pair of sides 26 may be disposed at both sides of the cup part 24 in a front direction.

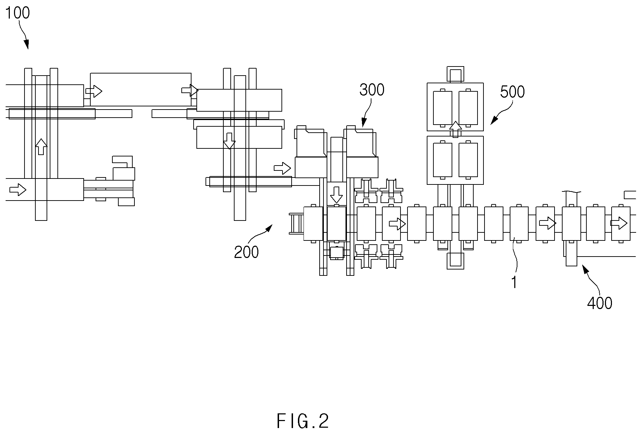

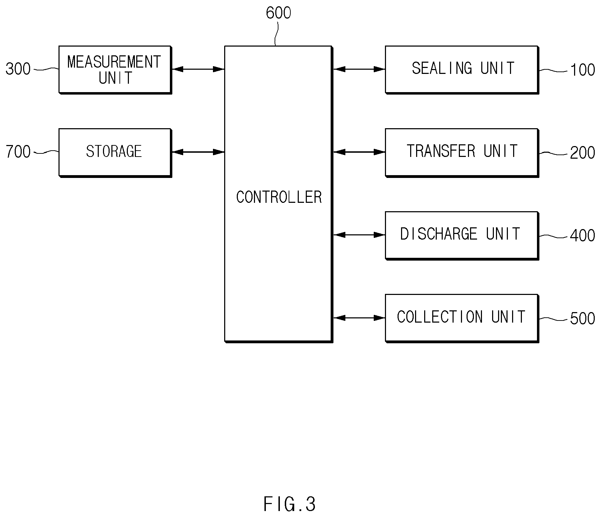

FIG. 2 is a schematic view illustrating the system for manufacturing the battery cell according to an embodiment of the present invention, and FIG. 3 is a control block diagram illustrating the system for manufacturing the battery cell according to an embodiment of the present invention.

The manufacturing system according to an embodiment of the present invention may include a sealing unit 100, a transfer unit 200. a measurement unit 300, and a discharge unit 400.

The sealing unit 100 may manufacture the battery cell 1 by sealing the pouch 20 in which the electrode assembly 10 is accommodated. In more detail, the sealing unit 100 may seal a portion of the terrace 25 in a state in which the folding part 23 of the pouch 20 is folded.

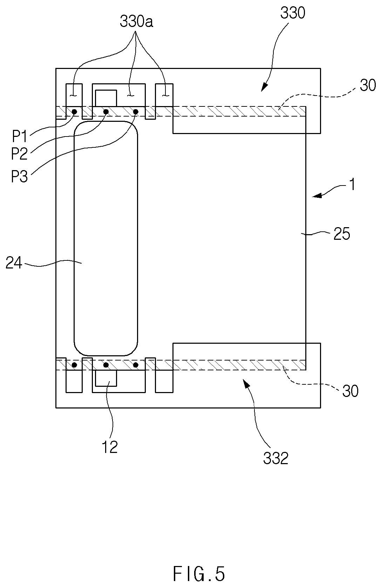

In more detail, the sealing part 30 (see FIG. 5) formed on the pouch 20 by the sealing unit 100 may be formed by fusing a terrace 25 of one case 21 and a terrace 25 of the other case 22 to each other.

The sealing part 30 may be formed on both edges of the battery cell 1 in a full-length direction. That is, a pair of sealing parts 30 spaced apart from each other with the cup part 24 therebetween may be formed.

Each of the sealing parts 30 may extend in the full-width direction of the battery cell 1. In more detail, one portion of each of the sealing parts 30 may be formed by fusing the pair of sides 26 to each other, and the other portion may be formed by fusing both sides of the pair of expansion parts 27 to each other.

In addition, in the expansion part 27, an edge extending in the full-length direction of the battery cell 1 may be in an unsealed state. Thus, an electrolyte may be injected into the battery cell 1 through a space between the pair of expansion parts 27 in a subsequent process. That is, the battery cell 1 manufactured in the sealing unit 100 may be in a state in which the electrolyte is not injected, and a portion of the expansion part 27 is not sealed.

The transfer unit 200 may transfer the battery cells 1 manufactured by the sealing unit 100 to the measurement unit 300. As an example, the transfer unit 200 may include a conveyor belt. However, the present invention is not limited thereto, and the configuration of the transfer unit 200 may be changed as needed.

The measurement unit 300 may measure a thickness of the sealing part 30 (see FIG. 5) formed on the pouch 20 by the sealing unit 100. The measurement unit 300 may measure a thickness of the sealing part 30 of all the battery cells 1 manufactured by the sealing unit 100. That is, the measurement unit 300 may perform a total inspection.

The measurement unit 300 may measure the thickness of the sealing part 30 in a state in which an operation of the transfer unit 200 is temporarily stopped.

A detailed configuration of the measurement unit 300 will be described later in detail.

The discharge unit 400 may discharge the battery cell 1 on which the measurement of the thickness of the sealing part 30 is completed in the measurement unit 300 to transfer the battery cell 1 to a subsequent process line. As an example, the discharge unit 400 may include a conveyor belt. However, the present invention is not limited thereto, and the configuration of the discharge unit 400 may be changed as needed.

In the subsequent process line, a process of injecting an electrolyte into the battery cell 1, a process of completely sealing an edge of the expansion part 27, an activation process of completing charging of the battery cell 1, and a degassing process of discharging a gas generated in the activation process from the battery cell may be performed. Since each of the processes is a known technique, detailed description thereof will be omitted.

That is, since the measurement of the thickness of the sealing part 30 of the battery cell 1 is performed before the injection of the electrolyte, the defective battery cell 1 is collected in advance in a collection unit 500 to be described later to prevent unnecessary consumption of the electrolyte.

The manufacturing system may further include the collection unit 500.

The collection unit 500 may collect the battery cells 1 inspected as defective by the measurement unit 300 so that the defective battery cells 1 are not discharged to the discharge unit 400. As an example, the collection unit 500 may include a robot arm that moves the battery cell 1 determined to be defective. However, the present invention is not limited thereto, and the configuration of the collection unit 500 may be changed as needed.

The manufacturing system may further include a controller 600 and a storage 700.

The controller 600 may include at least one processor. The controller 600 may control an overall operation of the manufacturing system. That is, the controller 600 may control the sealing unit 100, the transfer unit 200, the measurement unit 300, the discharge unit 400, and the collection unit 500. The configurations that are controllable by the controller 600 may be added, deleted, and changed as necessary.

The storage 700 may be a device capable of storing data. The controller 600 may store data in the storage 700 or recall data stored in the storage 700.

In more detail, the controller 600 may store thickness data of the sealing part 30 measured by the measurement unit 300 in the storage 700.

In addition, the controller 600 derives a critical range of the thickness of the sealing part 30 based on a plurality of pieces of thickness data collected in the storage 700 for a sample group constituted by the plurality of battery cells 1 to determine the battery cells 1, which are out of the critical range, as being defective. However, the present invention is not limited thereto, and it is also possible that the critical range is preset.

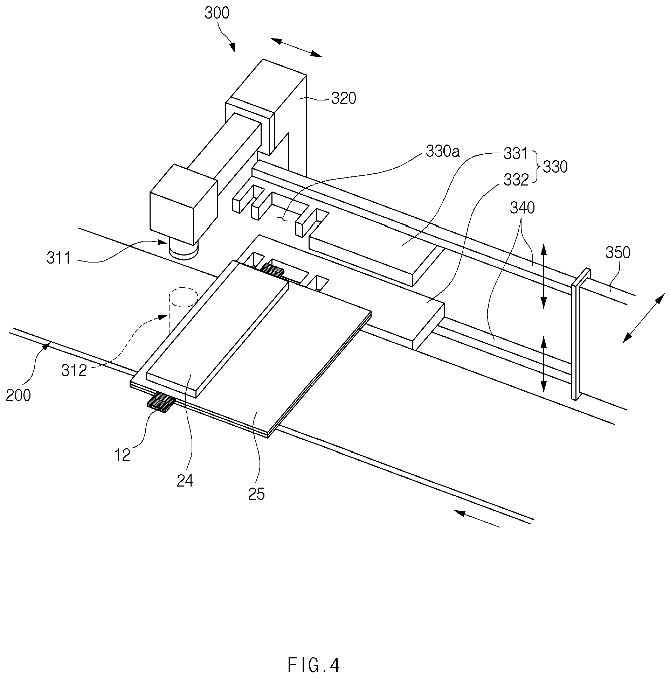

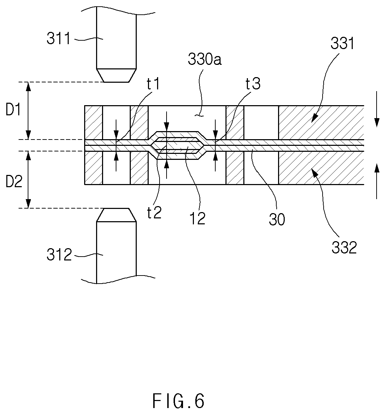

FIG. 4 is a perspective view illustrating the measurement unit according to an embodiment of the present invention, FIG. 5 is a plan view for explaining an operation of a fixing member according to an embodiment of the present invention, and FIG. 6 is a view for explaining operations of a first confocal-sensor and a second confocal-sensor according to an embodiment of the present invention.

The measurement unit 300 may include confocal-sensors 311 and 312 and a fixing member 330.

The confocal-sensors 311 and 312 are a kind of noncontact displacement measurement devices and are devices for precisely measuring displacement up to a specimen. Since the principle of each of the confocal-sensors 311 and 312 is a well-known technology, a detailed description thereof will be omitted.

The confocal-sensors 311 and 312 may include a first confocal-sensor 311 and a second confocal-sensor 312, which are disposed to face each other. In more detail, the first confocal-sensor 311 may be disposed above the second confocal-sensor 312, and the first confocal-sensor 311 and the second confocal-sensor 312 may be disposed to face each other in a vertical direction.

In a state in which the battery cell 1 is disposed in the measurement unit 300, the first confocal-sensor 311 may be disposed above the sealing part 30, and the second confocal-sensor 312 may be disposed below the sealing part 30. That is, the transfer unit 200 may transfer the battery cell 1 to locate the sealing part 30 between the first confocal-sensor 311 and the second confocal-sensor 312.

The first confocal-sensor 311 and the second confocal-sensor 312 may measure the thickness of the sealing part 30.

Each of the first confocal-sensor 311 and the second confocal-sensor 312 may be provided in pair so as to be spaced apart from each other in the full-length direction of the battery cell 1 and may measure thicknesses of the pair of sealing parts 30 disposed at sides opposite to each other with the cup part 24 therebetween.

The first confocal-sensor 311 may measure a distance D1 (hereinafter, referred to as a 'first distance') up to one surface of the sealing part 30, in more detail, up to a top surface of the sealing part 30. In addition, the second confocal-sensor 312 may measure a distance D2 (hereinafter, referred to a 'second distance') up to the other surface of the sealing part 30, in more detail, up to a bottom surface. Also, the controller 600 may calculate the thickness of the sealing part 30 based on the first distance D1 and the second distance D2. Since the distance between the first confocal-sensor 311 and the second confocal-sensor 312 is preset or adjusted by the controller 600, a value obtained by subtracting the first distance D1 and the second distance D2 from a distance between the first confocal-sensor 311 and the second confocal-sensor 312 may be calculated as the thickness of the sealing part 30.

In more detail, the first confocal-sensor 311 and the second confocal-sensor 312 may measure a thickness of a portion of the sealing part 30, at which the pair of sides 26 (see FIG. 1) are fused, i.e., a portion of the sealing part 30, which is disposed on each of both sides of the cup part 24. This is because the portion at which the pair of expansion parts 27 are fused may be folded or cut out in the subsequent process.

The thickness of the sealing part 30 may vary along a longitudinal direction of the sealing part 30. The longitudinal direction of the sealing part 30 may be parallel to a transfer direction of the battery cell 1.

Thus, the first confocal-sensor 311 and the second confocal-sensor 312 may continuously or discontinuously measure the thickness of the sealing part 30 in the longitudinal direction of the sealing part 30.

In more detail, the first confocal-sensor 311 and the second confocal-sensor 312 may sequentially measure different thicknesses t1, t2, and t3 at a plurality of points P1, P2, and P3 in the longitudinal direction of the sealing part 30.

In more detail, the first confocal-sensor 311 and the second confocal-sensor 312 may sequentially measure thicknesses t1, t2, and t3 at a plurality of points P1, P2, and P3, which are gradually away from the folding part 23 of the pouch 20. Also, at least one of the plurality of points P1, P2, and P3 may be a position corresponding to the electrode lead 12.

For example, the first confocal-sensor 311 and the second confocal-sensor 312 may sequentially measure the thickness t1 at the first point P1, the thickness t2 at the second point P2, and the thickness t3 at the third points P3. The first point P1 may be disposed at one side of the electrode lead 12, the second point P2 may be disposed on the electrode lead 12, and the third point P3 may be disposed at the other side of the electrode lead 12.

For this, the measurement unit 300 may further include a first moving device 320 that moves the first confocal-sensor 311 and the second confocal-sensor 312 in the longitudinal direction of the sealing part 30, i.e., in parallel to the full-width direction of the battery cell 1. The first moving device 320 may include an actuator (e.g., a motor) and may be connected to the first confocal-sensor 311.

The fixing member 330 may fix the sealing part 30 of the battery cell 1 in an unfolded state. In this state, the first confocal-sensor 311 and the second confocal-sensor 312 may measure the thickness of the sealing part 30. That is, the fixing member 330 may prevent the thickness of the sealing part 30 from being measured in a sagging or bent state to assist accurate measurement of the thickness of the sealing part 30.

The fixing member 330 may be provided in a pair, which are spaced apart from each other in the full-length direction of the battery cell 1 and may fix each of the pair of sealing parts 30 disposed at sides opposite to each other with the cup part 24 therebetween.

The fixing members 330 may include a first fixing member 331 and a second fixing member 332, which are disposed to face each other. In more detail, the first fixing member 331 may be disposed above the second fixing member 332, and the first fixing member 331 and the second fixing member 332 may be disposed to face each other in the vertical direction.

Each of the first fixing member 331 and the second fixing member 332 may have a plate or block shape that is disposed horizontally.

The first fixing member 331 and the second fixing member 332 may move in the full-length direction and the transfer direction of the battery cell 1.

In more detail, when the battery cell 1 is disposed in the measurement unit 300, the first fixing member 331 and the second fixing member 332 may approach the battery cell 1 from a side of the battery cell 1 and then move in a direction close to each other with the sealing part 30 of the battery cell 1 therebetween. Thus, the sealing part 30 may be fixed between the first fixing member 331 and the second fixing member 332.

For this, the measurement unit 300 may include an elevation device 340 that elevates the first and second fixing members 331 and 332 and a second moving device 350 that moves the first and second fixing members 331 and 332 in the full-length direction of the battery cell 1.

Each of the elevation device 340 and the second moving device 350 may include an actuator (e.g., a motor). The elevation device 340 is provided in a pair, which operate independently of each other and are respectively connected to the first fixing member 331 and the second fixing member 332, and the second moving device 350 may be connected to the elevation device 340.

An opening 330a for revealing at least a portion of the fixing member 330 and the sealing part 30 with respect to the first confocal-sensor 311 and the second confocal-sensor 312 may be formed. In more detail, an opening 330a that reveals at least a portion of the sealing part 30, at which the thickness is measured, with respect to the first confocal-sensor 311 and the second confocal-sensor 312 may be formed in each of the first fixing member 331 and the second fixing member 332.

In more detail, at least one opening 330a that reveals the plurality of points P1, P2, and P3, at which the thicknesses are measured, with respect to the first confocal-sensor 311 and the second confocal-sensor may be formed in each of the first fixing member 331 and the second fixing member 332.

The opening 330a may have a groove shape that is recessed outward from an inner surface of the fixing member 330.

The first confocal-sensor 311 may be disposed above the first fixing member 331 to measure the distance D1 up to the top surface of the sealing part 30 through the opening 330a formed in the first fixing member 331.

The second confocal-sensor 312 may be disposed below the second fixing member 332 to measure the distance D2 up to the bottom surface of the sealing part 30 through the opening 330a formed in the second fixing member 332.

Even in the state in which the fixing member 330 fixes the sealing part 30, the confocal-sensors 311 and 312 may accurately measure the thickness of the sealing part 30 by the opening 330a.

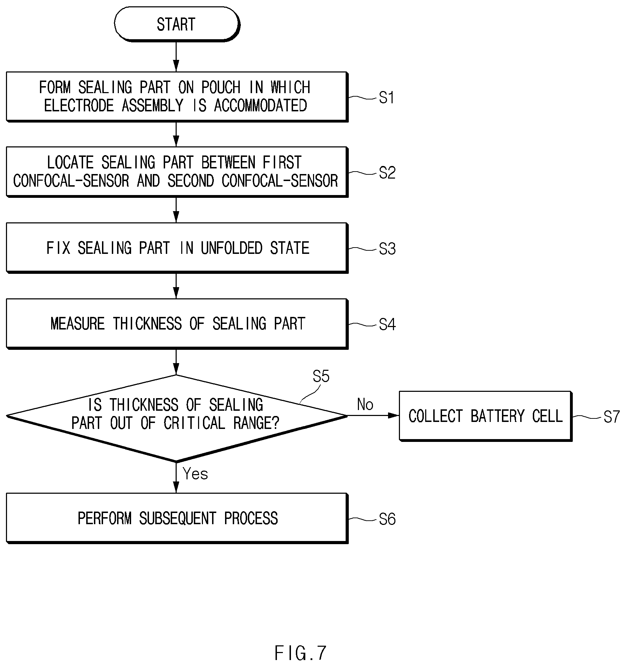

FIG. 7 is a flowchart illustrating a method for manufacturing a battery cell according to an embodiment of the present invention.

A method for manufacturing a battery cell according to the present embodiment may include a sealing process (S1), a transfer process (S2), a measurement process (S4), and a determination process (S5). The method for manufacturing the battery cell may further include a fixing process (S3).

In the sealing process (S1), a sealing unit 100 may manufacture the battery cell 1 by forming a sealing part 30 on a pouch 20 in which an electrode assembly 10 is accommodated.

During the transfer process (S2), a transfer unit 200 transfers the battery cell 1 to locate the sealing part 30 between a first confocal-sensor 311 and a second confocal-sensor 312.

In the fixing process (S3), a fixing member 330 of a measurement unit 300 may fix the sealing part 30 in an unfolded state.

In more detail, in the state in which the sealing part 30 is disposed between the first confocal-sensor 311 and the second confocal-sensor 312, an operation of the transfer unit 200 may be temporarily stopped. In addition, a first fixing member 331 and a second fixing member 332 may move toward the sealing part 30 from a side of the battery cell 1 and be disposed to face each other with the sealing part 30 therebetween. Thereafter, the first fixing member 331 and the second fixing member 332 may be elevated to be close to each other so that the sealing part 30 is fixed between the first fixing member 331 and the second fixing member 332.

In the measurement process (S4), the confocal-sensors 311 and 312 of the measurement unit 300 may measure a thickness of the sealing part 30.

In more detail, the first confocal-sensor 311 may measure a first distance D1 through an opening 330a formed in the first fixing member 331, and the second confocal-sensor 312 may measure a second distance D2 through an opening 330a formed in the second fixing member 332 to calculate the thickness of the sealing part 30 by using the first distance D1 and the second distance D2.

In addition, the confocal-sensors 311 and 312 may move in a longitudinal direction of the sealing part 30 to continuously or discontinuously measure the thickness of the sealing part 30. In more detail, the confocal-sensors 311 and 312 move in the longitudinal direction of the sealing part 30 to sequentially measure thicknesses t1, t2, and t3 at a plurality of points P1, P2, and P3 different from each other. At least one of the plurality of points P1, P2, and P3 may be disposed to correspond to an electrode lead 12.

In addition, each of the first confocal-sensor 311 and the second confocal-sensor 312 may be provided in a pair, and thicknesses of the pair of sealing parts 30 disposed at sides opposite to each other with the cup part 24 therebetween may be measured at the same time.

In addition, thickness data of the sealing part 30 may be stored in a storage 700.

During the determination process (S5), a controller 600 may determine that, if the thickness of the sealing part 30 measured through the measurement process (S4) is within a critical range, the battery cell 1 is normal, and if the thickness of the sealing part 30 is out of the critical range, the battery cell 1 is defective.

In more detail, for one battery cell 1, when the thickness of the sealing part 30 is within the critical range, a discharge unit 400 discharges the one battery cell 1 to a subsequent process line (S6), and when the thickness of the sealing part 30 is out of the critical range, a collection unit 500 may collect the one battery cell 1 (S7).

The critical range is preferably derived based on a plurality of pieces of thickness data collected in the storage 700 for a sample group constituted by a plurality of battery cells 1. On the other hand, it is also possible that the critical range is a preset range.

Thus, it is possible to totally inspect the battery cell 1 and measure the thickness of the sealing part 30 more accurately.

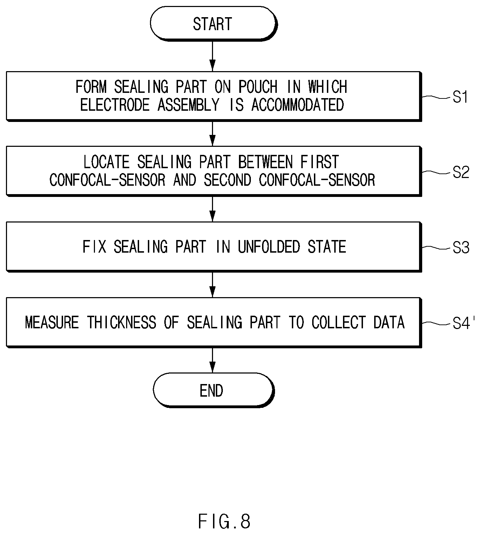

FIG. 8 is a flowchart illustrating a method for manufacturing a battery cell according to another embodiment of the present invention.

A method for manufacturing a battery cell according to the present embodiment may include a sealing process (S1), a transfer process (S2), and a measurement process (S4'). The method for manufacturing the battery cell may further include a fixing process (S3).

Contents of the sealing process (S1), the transferring process (S2), the fixing process (S3), and the measurement process (S4') will be cited from the contents described above.

Additionally, the thickness of the sealing part 30 measured in the measuring process (S4' ) may be stored in a storage 700 to collect thickness data, and thus, a separate determination process may not be performed. Thus, the

That is, the measuring process (S4') according to this embodiment is not for determining whether the battery cell 1 is defective, but for collecting the thickness data of the sealing part 30 by totally inspecting the plurality of battery cells 1.

Therefore, there is an advantage in that all the battery cells 1 manufactured by the manufacturing system may be informatized.

In addition, a critical range may be set based on a plurality of pieces of thickness data collected in the storage 700 to perform the method of manufacturing the battery cell according to the foregoing embodiment in the future.

### [Description of the Symbols]

| | | | |
|---|---|---|---|
| 1: | Battery cell | 10: | Electrode assembly |
| 12: | Electrode lead | 20: | Pouch |
| 24: | Cup part | 25: | Terrace |
| 26: | Side | 27: | Expansion part |
| 30: | Sealing part | 100: | Sealing unit |
| 200: | Transfer unit | 300: | Measurement unit |
| 311: | First confocal-sensor | 312: | Second confocal-sensor |
| 320: | First moving device | 330: | Fixing member |
| 330a: | Opening | 331: | First fixing member |
| 332: | Second fixing member | 340: | Elevation device |
| 350: | Second moving device | 400: | Discharge unit |
| 500: | Collection unit | 600: | Controller |
| 700: | Storage | | |

## Claims

1. A method for manufacturing a battery cell (1), the method comprising:
a sealing process (S1) of forming a sealing part (30) on a battery cell (1), in which an electrode assembly (10) is accommodated in a pouch (20);
a transfer process (S2) of transferring the battery cell (1) to locate the sealing part (30) between a first confocal-sensor (311) and a second confocal-sensor (312), which are disposed to face each other; and
a measurement process (S4, S4') of measuring a thickness (t1, t2, t3) of the sealing part (30) through the first confocal-sensor (311) and the second confocal-sensor (312); and
a fixing process (S3) performed between the transfer process (S2) and the measuring process (S4, S4'), wherein the sealing part (30) is fixed in an unfolded state using a fixing member (330, 331, 332),
wherein the fixing member (330, 331, 332) comprises a first fixing member (331) that supports one surface of the sealing part (30) in the unfolded state, and a second fixing member (332) that faces the first fixing member (331) and supports the other surface of the sealing part (30) in the unfolded state,
wherein an opening (330a) configured to reveal at least a portion of the sealing part (30) with respect to the first confocal-sensor (311) and the second confocal-sensor (312) is formed in the fixing member (330, 331, 332), and
wherein each of the first confocal-sensor (311) and the second confocal-sensor (312) is provided in a pair to measure thicknesses of a pair of sealing parts (30) disposed at sides opposite to each other with the electrode assembly (10) therebetween.

2. The method of claim 1, wherein, in the measurement process (S4, S4'), the first confocal-sensor (311) and the second confocal-sensor (312) continuously or discontinuously measure the thickness (t1, t2, t3) of the sealing part (30) while moving in a longitudinal direction of the sealing part (30).

3. The method of claim 1, wherein, in the measurement process (S4, S4'), the first confocal-sensor (311) and the second confocal-sensor (312) sequentially measure thicknesses (t1, t2, t3) at a plurality of points (P1, P2, P3) different from each other while moving in a longitudinal direction of the sealing part (30).

4. The method of claim 3, wherein at least one of the plurality of points (P1, P2, P3) is a position corresponding to an electrode lead (12, 13).

5. A system for manufacturing a battery cell (1), the system comprising:
a sealing unit (100) configured to form a sealing part (30) on a battery cell (1), in which an electrode assembly (10) is accommodated in a pouch (20);
a measurement unit (300) comprising a first confocal-sensor (311) and a second confocal-sensor (312), which are disposed to face each other;
a transfer unit (200) configured to transfer the battery cell (1) so that the sealing part (30) is disposed between the first confocal-sensor (311) and the second confocal-sensor (312); and
wherein the measurement unit (300) further comprises a fixing member (330, 331, 332) configured to fix the sealing part (30) in an unfolded state; and
a controller (600) configured to calculate a thickness (t1, t2, t3) of the sealing part (30) based on a distance (D1) from the first confocal-sensor (311) to one surface of the sealing part (30) and a distance (D2) from the second confocal-sensor (312) to the other surface of the sealing part (30),
wherein the fixing member (330, 331, 332) comprises a first fixing member (331) that supports one surface of the sealing part (30) in the unfolded state, and a second fixing member (332) that faces the first fixing member (331) and supports the other surface of the sealing part (30) in the unfolded state,
wherein an opening (330a) configured to reveal at least a portion of the sealing part (30) with respect to the first confocal-sensor (311) and the second confocal-sensor (312) is formed in the fixing member (330, 331, 332), and
wherein each of the first confocal-sensor (311) and the second confocal-sensor (312) is provided in a pair to measure thicknesses of a pair of sealing parts (30) disposed at sides opposite to each other with the electrode assembly (10) therebetween.

6. The system of claim 5, further comprising a discharge unit (400) configured to discharge the battery cell (1), in which the thickness (t1, t2, t3) of the sealing part (30) is completely measured, to a subsequent process line,
wherein the subsequent process line comprises a process of injecting an electrolyte into the battery cell (1).

7. The system of claim 5, wherein the measurement unit (300) further comprises a moving device (320) configured to move the first confocal-sensor (311) and the second confocal-sensor (312) in parallel to a longitudinal direction of the sealing part (30), and
the first confocal-sensor (311) and the second confocal-sensor move by the moving device (320) to continuously or discontinuously measure the thickness (t1, t2, t3) of the sealing part (30) in the longitudinal direction of the sealing part (30).

8. The system of claim 5, wherein the measurement unit (300) further comprises a moving device (320) configured to move the first confocal-sensor (311) and the second confocal-sensor (312) in parallel to a longitudinal direction of the sealing part (30), and
the first confocal-sensor (311) and the second confocal-sensor move by the moving device (320) to sequentially measure thicknesses (t1, t2, t3) at a plurality of points (P1, P2, P3) different from each other in the longitudinal direction of the sealing part (30).

9. The system of claim 5, further comprising a storage (700) configured to store thickness data calculated in the controller (600),
wherein the controller (600) is configured to:
derive a critical range based on a plurality of pieces of thickness data stored in the storage (700) for a sample group constituted by a plurality of secondary batteries (1); and
determine that one secondary battery (1) is defective when the thickness (t1, t2, t3) of the sealing part (30) is out of the critical range in the one secondary battery (1).

## Patentansprüche

1. Verfahren zum Herstellen einer Batteriezelle (1), wobei das Verfahren umfasst:
einen Versiegelungsprozess (S1) zum Bilden eines Versiegelungsabschnitts (30) auf einer Batteriezelle (1), in dem eine Elektrodenanordnung (10) in einem Pouch (20) aufgenommen ist;
einen Transferprozess (S2) zum Transferieren der Batteriezelle (1), um den Versiegelungsabschnitt (30) zwischen einem ersten konfokalen Sensor (311) und einem zweiten konfokalen Sensor (312) anzuordnen, die so angeordnet sind, dass sie einander zugewandt sind; und
einen Messprozess (S4, S4') zum Messen einer Dicke (t1, t2, t3) des Versiegelungsanschnitts (30) durch den ersten konfokalen Sensor (311) und den zweiten konfokalen Sensor (312); und
einen Fixierprozess (S3), der zwischen dem Transferprozess (S2) und dem Messprozess (S4, S4') durchgeführt wird, wobei der Versiegelungsabschnitt (30) in einem entfalteten Zustand unter Verwendung eines Fixierelements (330, 331, 332) fixiert wird,
wobei das Fixierelement (330, 331, 332) ein erstes Fixierelement (331), das eine Oberfläche des Versiegelungsabschnitts (30) in dem entfalteten Zustand stützt, und ein zweites Fixierelement (332), das dem ersten Fixierelement (331) zugewandt ist und die andere Oberfläche des Versiegelungsabschnitts (30) in dem entfalteten Zustand stützt, umfasst,
wobei eine Öffnung (330a), die konfiguriert ist, um mindestens einen Abschnitt des Versiegelungsabschnitts (30) in Bezug auf den ersten konfokalen Sensor (311) und den zweiten konfokalen Sensor (312) freizulegen, in dem Fixierelement (330, 331, 332) gebildet ist, und
wobei jeder von dem ersten konfokalen Sensor (311) und dem zweiten konfokalen Sensor (312) paarweise bereitgestellt ist, um Dicken eines Paars von Versiegelungsabschnitten (30) zu messen, die an einander gegenüberliegenden Seiten mit der Elektrodenanordnung (10) dazwischen angeordnet sind.

2. Verfahren nach Anspruch 1, wobei in dem Messprozess (S4, S4') der erste konfokale Sensor (311) und der zweite konfokale Sensor (312) kontinuierlich oder diskontinuierlich die Dicke (t1, t2, t3) des Versiegelungsabschnitts (30) messen, während sie sich in einer Längsrichtung des Versiegelungsabschnitts (30) bewegen.

3. Verfahren nach Anspruch 1, wobei in dem Messprozess (S4, S4') der erste konfokale Sensor (311) und der zweite konfokale Sensor (312) nacheinander Dicken (t1, t2, t3) an mehreren Punkten (P1, P2, P3) messen, die voneinander verschieden sind, während sie sich in einer Längsrichtung des Versiegelungsabschnitts (30) bewegen.

4. Verfahren nach Anspruch 3, wobei mindestens einer der mehreren Punkte (P1, P2, P3) eine Position ist, die einer Elektrodenleitung (12, 13) entspricht.

5. System zum Herstellen einer Batteriezelle (1), wobei das System aufweist:
eine Versiegelungseinheit (100), die konfiguriert ist, um einen Versiegelungsabschnitt (30) auf einer Batteriezelle (1) zu bilden, in dem eine Elektrodenanordnung (10) in einem Pouch (20) aufgenommen ist;
eine Messeinheit (300), die einen ersten konfokalen Sensor (311) und einen zweiten konfokalen Sensor (312) aufweist, die so angeordnet sind, dass sie einander zugewandt sind;
eine Transfereinheit (200), die konfiguriert ist, um die Batteriezelle (1) so zu transferieren, dass der Versiegelungsanschnitt (30) zwischen dem ersten konfokalen Sensor (311) und dem zweiten konfokalen Sensor (312) angeordnet ist; und
wobei die Messeinheit (300) ferner ein Fixierelement (330, 331, 332) aufweist, das konfiguriert ist, um den Versiegelungsabschnitt (30) in einem entfalteten Zustand zu fixieren; und
eine Steuerung (600), die konfiguriert ist, um eine Dicke (t1, t2, t3) des Versiegelungsabschnitts (30) basierend auf einem Abstand (D1) von dem ersten konfokalen Sensor (311) zu einer Oberfläche des Versiegelungsabschnitts (30) und einem Abstand (D2) von dem zweiten konfokalen Sensor (312) zu der anderen Oberfläche des Versiegelungsabschnitts (30) zu berechnen,
wobei das Fixierelement (330, 331, 332) ein erstes Fixierelement (331), das eine Oberfläche des Versiegelungsabschnitts (30) in dem entfalteten Zustand stützt, und ein zweites Fixierelement (332), das dem ersten Fixierelement (331) zugewandt ist und die andere Oberfläche des Versiegelungsabschnitts (30) in dem entfalteten Zustand stützt, aufweist,
wobei eine Öffnung (330a), die konfiguriert ist, um mindestens einen Abschnitt des Versiegelungsabschnitts (30) in Bezug auf den ersten konfokalen Sensor (311) und den zweiten konfokalen Sensor (312) freizulegen, in dem Fixierelement (330, 331, 332) gebildet ist, und
wobei jeder von dem ersten konfokalen Sensor (311) und dem zweiten konfokalen Sensor (312) paarweise bereitgestellt ist, um Dicken eines Paars von Versiegelungsabschnitten (30) zu messen, die an einander gegenüberliegenden Seiten mit der Elektrodenanordnung (10) dazwischen angeordnet sind.

6. System nach Anspruch 5, ferner aufweisend eine Entladeeinheit (400), die konfiguriert ist, um die Batteriezelle (1), in der die Dicke (t1, t2, t3) des Versiegelungsabschnitts (30) vollständig gemessen wird, zu einer nachfolgenden Prozesslinie zu entladen,
wobei die nachfolgende Prozesslinie einen Prozess des Injizierens eines Elektrolyts in die Batteriezelle (1) aufweist.

7. System nach Anspruch 5, wobei die Messeinheit (300) ferner eine Bewegungsvorrichtung (320) aufweist, die konfiguriert ist, um den ersten konfokalen Sensor (311) und den zweiten konfokalen Sensor (312) parallel zu einer Längsrichtung des Versiegelungsabschnitts (30) zu bewegen, und
der erste konfokale Sensor (311) und der zweite konfokale Sensor sich durch die Bewegungsvorrichtung (320) bewegen, um kontinuierlich oder diskontinuierlich die Dicke (t1, t2, t3) des Versiegelungsabschnitts (30) in der Längsrichtung des Versiegelungsabschnitts (30) zu messen.

8. System nach Anspruch 5, wobei die Messeinheit (300) ferner eine Bewegungsvorrichtung (320) aufweist, die konfiguriert ist, um den ersten konfokalen Sensor (311) und den zweiten konfokalen Sensor (312) parallel zu einer Längsrichtung des Versiegelungsabschnitts (30) zu bewegen, und
der erste konfokale Sensor (311) und der zweite konfokale Sensor sich durch die Bewegungsvorrichtung (320) bewegen, um nacheinander Dicken (t1, t2, t3) an mehreren Punkten (P1, P2, P3) zu messen, die voneinander in der Längsrichtung des Versiegelungsabschnitts (30) verschieden sind.

9. System nach Anspruch 5, das ferner einen Speicher (700) aufweist, der konfiguriert ist, um Dickendaten zu speichern, die in der Steuerung (600) berechnet werden,
wobei die Steuerung (600) konfiguriert ist, um:
einen kritischen Bereich basierend auf mehreren Stücken von Dickendaten abzuleiten, die in dem Speicher (700) für eine Probengruppe gespeichert sind, die aus mehreren Sekundärbatterien (1) besteht; und
zu bestimmen, dass eine Sekundärbatterie (1) defekt ist, wenn die Dicke (t1, t2, t3) des Versiegelungsabschnitts (30) außerhalb des kritischen Bereichs in der einen Sekundärbatterie (1) liegt.

## Revendications

1. Procédé de fabrication d'une cellule de batterie (1), le procédé comprenant :
un processus de scellement (S1) comportant la formation d'une élément de scellement (30) sur une cellule de batterie (1), dans lequel un ensemble d'électrode (10) est logé dans une poche (20) ;
un processus de transfert (S2) comportant le transfert de la cellule de batterie (1) pour positionner l'élément de scellement (30) entre un premier capteur confocal (311) et un deuxième capteur confocal (312) disposés de façon à se faire face ; et
un processus de mesure (S4, S4') pour mesurer une épaisseur (t1, t2, t3) de l'élément de scellement (30) à travers le premier capteur confocal (311) et le deuxième capteur confocal (312) ; et
un processus de fixation (S3) effectué entre le processus de transfert (S2) et le processus de mesure (S4, S4'), l'élément de scellement (30) étant fixé à l'état déplié à l'aide d'un élément de fixation (330, 331, 332),
l'élément de fixation (330, 331, 332) comprenant un premier élément de fixation (331) supportant une surface de l'élément de scellement (30) à l'état déplié, et un deuxième élément de fixation (332) situé face au premier élément de fixation (331) et supportant l'autre surface de l'élément de scellement (30) à l'état déplié,
une ouverture (330a) configurée pour révéler au moins une partie de l'élément de scellement (30) relativement au premier capteur confocal (311) et au deuxième capteur confocal (312) étant formée dans l'élément de fixation (330, 331, 332), et
chacun du premier capteur confocal (311) et du deuxième capteur confocal (312) étant agencé sous forme de paire pour mesurer des épaisseurs d'une paire d'éléments de scellement (30) disposés sur des côtés se faisant face, avec l'ensemble d'électrode (10) entre eux.

2. Procédé selon la revendication 1, dans lequel, au cours du processus de mesure (S4, S4'), le premier capteur confocal (311) et le deuxième capteur confocal (312) mesurent, de façon continue ou discontinue, l'épaisseur (t1, t2, t3) de l'élément de scellement (30) tout en se déplaçant dans une direction longitudinale de l'élément de scellement (30).

3. Procédé selon la revendication 1, dans lequel, au cours du processus de mesure (S4, S4'), le premier capteur confocal (311) et le deuxième capteur confocal (312) mesurent en séquence des épaisseurs (t1, t2, t3) dans une pluralité de points (P1, P2, P3) différents l'un de l'autre, tout en se déplaçant dans une direction longitudinale de l'élément de scellement (30).

4. Procédé selon la revendication 3, au moins un de la pluralité de points (P1, P2, P3) étant une position correspondant à un conducteur d'électrode (12, 13).

5. Système pour la fabrication d'une cellule de batterie (1), le système comprenant :
un dispositif de scellement (100) configuré pour former un élément de scellement (30) sur une cellule de batterie (1), dans lequel un ensemble d'électrode (10) est logé dans une poche (20) ;
un dispositif de mesure (300) comprenant un premier capteur confocal (311) et un deuxième capteur confocal (312), disposés l'un en face de l'autre ;
un dispositif de transfert (200) configuré pour transférer la cellule de batterie (1) de sorte que l'élément de scellement (30) soit disposé entre le premier capteur confocal (311) et le deuxième capteur confocal (312) ; et
le dispositif de mesure (300) comprenant en outre un élément de fixation (330, 331, 332) configuré pour fixer l'élément de scellement (30) à l'état déplié ; et
un contrôleur (600) configuré pour calculer une épaisseur (t1, t2, t3) de l'élément de scellement (30) en fonction d'une distance (D1) du premier capteur confocal (311) à une surface de l'élément de scellement (30), et d'une distance (D2) du deuxième capteur confocal (312) à l'autre surface de l'élément de scellement (30),
l'élément de fixation (330, 331, 332) comprenant un premier élément de fixation (331) supportant une surface de l'élément de scellement (30) à l'état déplié, et un deuxième élément de fixation (332) situé face au premier élément de fixation (331) et supportant l'autre surface de l'élément de scellement (30) à l'état déplié,
une ouverture (330a) configurée pour révéler au moins une partie de l'élément de scellement (30) relativement au premier capteur confocal (311) et au deuxième capteur confocal (312) étant formée dans l'élément de fixation (330, 331, 332), et
chacun du premier capteur confocal (311) et du deuxième capteur confocal (312) étant agencé sous forme de paire pour mesurer des épaisseurs d'une paire d'éléments de scellement (30) disposés sur des côtés mutuellement opposés, avec l'ensemble d'électrode (10) entre eux.

6. Système selon la revendication 5, comprenant en outre une unité de décharge (400) configurée pour décharger la cellule de batterie (1), dans laquelle l'épaisseur (t1, t2, t3) de l'élément de scellement (30) est entièrement mesurée, dans une conduite pour un traitement ultérieur,
la conduite pour un traitement ultérieur comprenant un processus d'injection d'un électrolyte dans la cellule de batterie (1).

7. Système selon la revendication 5, le dispositif de mesure (300) comprenant en outre un dispositif de déplacement (320) configuré pour déplacer le premier capteur confocal (311) et le deuxième capteur confocal (312) parallèlement à une direction longitudinale de l'élément de scellement (30), et
le premier capteur confocal (311) et le deuxième capteur confocal étant déplacés par le dispositif de déplacement (320) pour mesurer de façon continue ou par intermittence l'épaisseur (t1, t2, t3) de l'élément de scellement (30) dans le sens longitudinal de l'élément de scellement (30).

8. Système selon la revendication 5, le dispositif de mesure (300) comprenant en outre un dispositif de déplacement (320) configuré pour déplacer le premier capteur confocal (311) et le deuxième capteur confocal (312) parallèlement à une direction longitudinale de l'élément de scellement (30), et
le premier capteur confocal (311) et le deuxième capteur confocal étant déplacés par le dispositif de déplacement (320) pour mesurer en séquence l'épaisseur (t1, t2, t3) sur une pluralité de points (P1, P2, P3) différents l'un de l'autre dans le sens longitudinal de l'élément de scellement (30).

9. Système selon la revendication 5, comprenant en outre une mémoire (700) configurée pour enregistrer des données d'épaisseur calculées dans le contrôleur (600),
le contrôleur (600) étant configuré pour :
dériver un seuil critique basé sur une pluralité de données d'épaisseur enregistrées dans la mémoire (700) pour un groupe d'échantillons composé d'une pluralité de batteries secondaires (1) ; et
déterminer qu'une batterie secondaire (1) est défaillante lorsque l'épaisseur (t1, t2, t3) de l'élément de scellement (30) est hors du seuil critique dans l'une batterie secondaire (1).
